# EUROPÄISCHE PATENTSCHRIFT

(11) **EP 3 058 286 B1**
(45) Veröffentlichungstag und Bekanntmachung des Hinweises auf die Patenterteilung: **13.03.2019**
(21) Anmeldenummer: 14799338.0
(22) Anmeldetag: 14.10.2014
(51) Int. Cl.: F24S 30/40, F24S 30/00, G02B 7/183, F24S 50/20

(54) **VORRICHTUNG ZUR REFLEKTION VON EINFALLENDEM LICHT**
APPARATUS FOR REFLECTING INCIDENT LIGHT
DISPOSITIF PERMETTANT DE FAIRE RÉFLÉCHIR UNE LUMIÈRE INCIDENTE

(30) Priorität: 15.10.2013 DE 102013017037
(43) Veröffentlichungstag der Anmeldung: 24.08.2016
(73) Patentinhaber: Fachhochschule Aachen, 52066 Aachen (DE)
(72) Erfinder: HILGER, Patrick, 51688 Wipperfürth (DE); TEIXEIRA BOURA, Cristiano José, 50823 Köln (DE)
(74) Vertreter: Cohausz Hannig Borkowski Wißgott
(86) Internationale Anmeldenummer: PCT/EP2014/002768
(87) Internationale Veröffentlichungsnummer: WO 2015/055302

(56) Entgegenhaltungen:
- WO-A1-2010/101468
- WO-A1-2010/101468
- FR-A1- 2 458 768
- US-A- 4 110 009
- US-A- 4 218 114
- US-A1- 2008 282 828
- US-A1- 2008 282 828
- US-A1- 2011 146 663
- US-A1- 2011 146 663

## Beschreibung

Die Erfindung betrifft eine Vorrichtung zur Reflektion von einfallendem Licht, insbesondere Sonnenlicht, umfassend mehrere nebeneinander angeordnete Reflektoreinheiten mit jeweils mindestens einer Reflektorfläche, wobei die Reflektorflächen aller Reflektoreinheiten verschwenkbar sind, wobei jede Reflektoreinheit eine Stange und eine am oberen freien Ende der Stange befestigte Reflektorfläche umfasst, ein unteres sphärisches Gelenk am unteren Ende der Stange umfasst, mit dem die Stange mit einem für alle Reflektoreinheiten gemeinsamen beweglichen Koppelelement gelenkig verbunden ist, und ein sphärisches Kardangelenk in einem Zwischenbereich zwischen oberem Ende und unterem Ende der Stange umfasst, welches die Stange mit einem für alle Reflektoreinheiten gemeinsamen ortsfesten Basiselement gelenkig verbindet und welches jede Reflekoreinheit beweglich um ihren eigenen ortfesten Gelenkmittelpunkt lagert, wobei durch Bewegung des unter dem Basiselement angeordneten Koppelelementes die Reflektorflächen aller Reflektoreinheiten gleichzeitig in gleicher Richtung und gleicher Weite bewegbar sind, wobei die Vorrichtung eine erste und eine zweite Antriebseinheit umfasst, wobei jede Antriebseinheit ein mit dem Basiselement verbundenes Kardangelenk umfasst, das über eine um den Gelenkmittelpunkt des Kardangelenkes bewegliche Verbindungsstange mit einem am Koppelelement befestigten sphärischen Gelenk verbunden ist, wobei die am Basiselement befestigten Kardangelenke von erstem und zweiten Antriebseinheit in zueinander senkrechten Drehachsen motorisch angetrieben sind, wobei das angetriebene Kardangelenk, die Verbindungsstange und das die Verbindungsstange mit dem Koppelelement verbindende sphärische Gelenk einer jeweiligen Antriebeinheit Teile einer Reflektoreinheit sind.

Solche Vorrichtungen werden üblicherweise eingesetzt, um Sonnenlicht zu reflektieren und, insbesondere konzentriert bzw. gebündelt einer Anwendung zuzuführen, z.B. zur Aufheizung einer Absorberfläche in einem Solarkraftwerk oder auch nur zu Beleuchtungszwecken, insbesondere dann ungebündelt. Dafür kann es vorgesehen sein, dass die einzelnen Reflektorflächen jeweils einzeln, in Gruppen oder alle gemeinsam bewegt werden.

Durch die Bewegung der Reflektorflächen soll üblicherweise die Bewegung der Erde um die Sonne im Laufe eines Tages ausgeglichen werden, ein reflektiertes Lichtbündel also zumindest im Wesentlichen seine Ausrichtung, z.B. auf eine Absorberfläche beibehalten. Solche Anordnungen werden auch als Heliostaten bezeichnet. Die Erfindung ist jedoch nicht auf solche bewegungskompensierenden Anwendungen beschränkt.

Eine Vorrichtung zur Reflektion von Sonnenlicht mit einer Vielzahl von Reflektoreinheiten ist weiterhin z.B. aus der WO 2006/005303 A1 bekannt.

Das Dokument WO 2010/101468 A1 offenbart eine Vorrichtung zur Reflektion von einfallendem Licht gemäß dem Oberbegriff des Anspruchs 1.

Als problematisch hat es sich bei bisherigen Ausführungen erwiesen, die Vielzahl der Reflektorflächen der Reflektoreinheiten synchron und mit großer Präzision zu bewegen. Insbesondere die gleichzeitige Bewegung der Reflektorflächen ist mechanisch und hinsichtlich der Antriebstechnik aufwendig. Auch weisen bisherigen Vorrichtungen eine hohe Windanfälligkeit auf.

Es ist daher die Aufgabe der Erfindung eine Vorrichtung der eingangs genannten gattungsgemäßen Art insoweit zu verbessern, dass innerhalb einer Vorrichtung die einzelnen Reflektorflächen der Reflektoreinheiten gleichzeitig und präzise bewegt werden können unter Einsatz einer mechanisch und kostenmäßig einfachen Antriebstechnik.

Die Aufgabe wird erfindungsgemäß dadurch gelöst, dass die Vorrichtung der eingangs genannten Art eine erste und eine zweite Antriebseinheit umfasst und jede Antriebseinheit ein mit dem Basiselement verbundenes Kardangelenk umfasst, das über eine um den Gelenkmittelpunkt des Kardangelenkes bewegliche Verbindungsstange verbunden ist mit einem am Koppelelement befestigten sphärischen Gelenk und die am Basiselement befestigten Kardangelenke von erstem und zweiten Antrieb in zueinander senkrechten Drehachsen motorisch angetrieben sind, wobei das angetriebene Kardangelenk, die Verbindungsstange und das jeweilige die Verbindungsstange mit dem Koppelelement verbindende sphärische Gelenk einer jeweiligen Antriebeinheit Teile einer Reflektoreinheit sind. Es ist ein wesentlicher Kerngedanke der Erfindung die einzelnen Reflektoreinheiten mechanisch untereinander zu koppeln, so dass diese durch Bewegung eines einzigen gemeinsamen Koppelelementes dementsprechend auch alle gleichzeitig bewegt werden können.

Hier erfolgt diese mechanische Kopplung durch ein gemeinsames Koppelelement, an welchem alle sphärischen Gelenke, insbesondere Kardangelenke, an den unteren Enden der Stangen der Reflektoreinheiten befestigt sind. Bezogen auf eine erfindungsgemäße Vorrichtung sind somit alle in der Vorrichtung vorhandenen unteren sphärischen Gelenke der Reflektoreinheiten an dem einen gemeinsamen Koppelelement befestigt.

Die erfindungsgemäß bevorzugte Ausführung sieht vor, dass die Gelenkmittelpunkte dieser sphärischen Gelenke alle in einer gemeinsamen Ebene liegen, wofür die sphärischen Gelenke z.B. auf oder in einer ebenen Platte oder sonstigem flächigen Element als Koppelelement befestigt werden. Z.B. kann ein Koppelelement auch als Gitternetz ausgebildet sein, wobei die sphärischen Gelenke in den Netzknoten angeordnet sind. Ein solches Koppelelement kann große freie Bereiche, nämlich die Gittermaschen aufweisen und somit sehr leicht bauend ausgebildet sein.

Der Gelenkmittelpunkt ist hier derjenige Punkt eines sphärischen Gelenkes, um welchen die Bewegung des Gelenkes stattfindet.

Neben dem beweglichen Koppelelement weist eine erfindungsgemäße Vorrichtung ein im Raum, also z.B. im terrestrischen Bezugssystem ortfestes Basiselement auf, welches ebenso wie das Koppelelement als ebene Platte oder sonstiges flächiges Element, z.B. auch als Gitternetz ausgebildet sein kann, mit gleicher Gelenkanordnung wie zum Koppelelement beschrieben wurde.

An diesem Basiselement sind alle Reflektoreinheiten einer erfindungsgemäßen Vorrichtung in einem Bereich der Stange zwischen deren beiden Enden um einen Drehpunkt beweglich gelagert, wobei dieser Drehpunkt der Gelenkmittelpunkt wiederum jeweils eines sphärischen Gelenkes ist, nämlich eines Kardangelenkes. Jede Stange einer jeder Reflektoreinheit ist somit durch aktive Bewegung von deren unteren Ende um einen Drehpunkt zwischen unterem und oberen Ende beweglich, so dass durch die Bewegung des alle unteren Enden verbindenden Koppelelementes alle am jeweiligen oberen Ende befestigten Reflektorflächen bewegbar sind.

Das Verhältnis der Bewegungsweiten von Koppelelement und der Reflektorflächen ist dabei einstellbar durch das Verhältnis der Längen der Stangeabschnitte zwischen unteren sphärischen Gelenk und dem sphärischen Gelenk im Zwischenbereich sowie zwischen der Reflektorfläche und dem sphärischen Gelenk im Zwischenbereich. Bevorzugt können die Längenverhältnisse als 1:1 gewählt werden.

Die erfindungsgemäße Vorrichtung erweist sich als besonders präzise, weil bereits durch sphärische Gelenke eine hohe innere Präzision bereitgestellt werden kann. Insbesondere bei Einsatz von Kardangelenken mit typischerweise unter 90 Grad gekreuzten Drehachsen der Kardanrahmen bzw. Kardanringe.

Ein Antrieb des beweglichen Koppelelementes in wenigstens zwei insbesondere zueinander senkrechten Richtungen zum Zweck, die Reflektorflächen alle gleichzeitig zu bewegen kann grundsätzlich durch jede denkbare Art erfolgen.

Die Erfindung sieht vor, die Bewegung über das ortsfeste Basiselement, nämlich über daran befestigte Kardangelenke, in das Koppelelement einzuleiten.

Hierfür ist es erfindungsgemäß vorgesehen, dass die Vorrichtung eine erste und eine zweite Antriebseinheit umfasst und jede Antriebseinheit ein mit dem Basiselement verbundenes Kardangelenk umfasst, das über eine um den Gelenkmittelpunkt des Kardangelenkes bewegliche Verbindungsstange verbunden ist mit einem an dem Koppelelement befestigten sphärischen Gelenk, insbesondere Kardangelenk, in welchen die Stange um dessen Gelenkmittelpunkt beweglich ist und die am Basiselement befestigten Kardangelenke von erstem und zweiten Antrieb in zueinander senkrechten Drehachsen motorisch angetrieben sind.

Die kinematische Verbindung in einer Antriebseinheit erfolgt demnach mechanisch genauso wie innerhalb einer Reflektoreinheit, was bei der Erfindung erschließt, eine jede Antriebeinheit direkt innerhalb einer Reflektoreinheit zu integrieren.

Innerhalb einer Antriebseinheit erfolgt der Antrieb an einer Drehachse desjenigen Kardangelenkes, welches am Basiselement befestigt ist. Hierdurch wird die Antriebsenergie direkt in den Gelenkmittelpunkt eingeleitet. Dabei kann sowohl die innere als auch die äußere Drehachse des Kardangelenkes angetrieben sein. Z.B. kann bei Antrieb der inneren Drehachse ein Antrieb im mittleren Rahmen / ring des Kardangelenkes angeordnet sein, was auch anschlußtechnisch unproblematisch ist, da in der Vorrichtungen nur reversierende Achsdrehungen kleiner 180 Grad erfolgen. Ebenso kann die äußere Drehachse angetrieben sein, was in einer noch zu beschreibenden Ausführung bevorzugt ist.

Dadurch, dass die angetriebenen Drehachsen beider Antriebseinheiten, bzw. deren Kardangelenke senkrecht zueinander orientiert sind, wird erreicht, dass eine Bewegung in zwei Freiheitgraden möglich ist und diese Bewegung über die Verbindungsstangen beider Antriebe auf das gemeinsame Koppelelement übertragen wird.

Eine weiterhin konstruktiv bevorzugte Ausführung kann hier vorsehen, dass die beiden am Basiselement befestigen Kardangelenke der Antriebseinheiten hinsichtlich ihrer beiden unabhängigen Drehachsen senkrecht zueinander orientiert sind und jedes der beiden um diejenige Drehachse angetrieben ist, welches den äußeren am Basiselement befestigten Rahmen/Ring des Kardangelenkes mit dem mittleren Rahmen/Ring verbindet, also um die äußere Drehachse angetrieben ist.

Dies hat den Vorteil, dass diese Drehachsen der Kardangelenke problemlos von außen zugänglich sind, und somit ausserhalb der Kardangelenke angeordnete motorische Antriebe vorgesehen sein können, um diese Kardanachsen zu bewegen. Z.B. können ein Schritt- oder Servomotor an diese Drehachsen angeschlossen sein. Bei dieser Ausführung sind demnach auch die Antriebsachsen der Antriebe, bzw. der Schritt- oder Servomotoren senkrecht zueinander orientiert.

Durch die Realisierung der Antriebseinheiten direkt jeweils innerhalb einer der Reflektoreinheiten bildet demnach das angetriebene Kardangelenk das sphärische Gelenk einer Reflektoreinheit im Zwischenbereich der Reflektoreinheit, die Verbindungsstange der Antriebseinheit ist realisiert durch die Stange der Reflektoreinheit und das untere sphärische Gelenk der Antriebseinheit ist gebildet durch das untere sphärischen Gelenk einer Reflektoreinheit, was ebenso als Kardangelenk ausgebildet sein kann.

Demnach ist mechanisch betrachtet zur Ausbildung einer Antriebseinheit bei der Erfindung eine Reflektoreinheit im Gelenkmittelpunkt seines als Kardangelenk ausgebildeten sphärischen Gelenkes im Zwischenbereich der Stange angetrieben. Es gibt demnach in der Vorrichtung eine erste Reflektoreinheit mit einer angetriebenen Kardanachse und eine zweite Reflektoreinheit mit einer dazu senkrecht orientierten angetriebenen Kardanachse. Hierzu können wie zuvor beschrieben die beiden angetriebenen Kardangelenke in der Achsrichtung senkrecht zueinander orientiert an dem Basiselement befestigt sein.

Bei der Ausgestaltung der Antriebeinheit innerhalb einer Reflektoreinheit kann es weiterhin bevorzugt vorgesehen sein, dass die Gelenkmittelpunkte derjenigen sphärischen Kardangelenke, welche eine Stange (einer Reflektoreinheit) und/oder eine Verbindungsstange (einer Antriebseinheit) mit dem gemeinsamen Basiselement verbinden oberhalb der Schwerpunkte der Reflektoreinheiten und/oder Antriebseinheiten angeordnet sind.

Demnach liegen die Schwerpunkte aller Reflektoreinheiten und/oder Antriebseinheiten unterhalb der Lagerpunkte, die durch die Gelenkmittelpunkte der sphärischen bzw. kardanischen Gelenke am Basiselement gegeben sind.

Vorteilhaft wird hierdurch erzielt, dass ein evtl. vorhandenes Spiel innerhalb der sphärischen / kardanischen Gelenke des Basiselementes in Schwerkraftrichtung eliminiert wird, somit also alle Reflektoreinheiten aus dieser Lage spielfrei bewegt werden.

Eine andere Ausführung kann auch vorsehen, den Schwerpunkt einer jeden Reflektoreinheit bzw. auch Antriebseinheit genau in den Gelenkmittelpunkt des jeweiligen sphärischen bzw. kardanischen Gelenkes am Basiselement zu legen. Hierdurch wird ein indifferentes Gleichgewicht erzeugt, so dass die Reflektoreinheiten besonders einfach bewegt werden können.

Eine Ausführung, die im Wesentlichen beide Vorteile kombiniert kann vorsehen, die Schwerpunkte nur knapp unterhalb der Gelenkmittelpunkte zu legen.

Weitere Ausführungen der Erfindung können z.B. vorsehen, dass wenigstens eine Reflektoreinheit einen Neigungssensor umfasst. Da alle Reflektoreinheiten gekoppelt sind kann so die Neigung aller Reflektorflächen ermittelt werden und ggfs. nachgeregelt werden.

Auch kann an der Vorrichtung ein Sonnenstandssensor vorgesehen sein, um in Abhängigkeit von dessen Signal die Ansteuerung der Antriebe der Antriebseinheiten vorzunehmen und die Reflektoreinheiten sonnenstandabhängig nachzufahren.

Weiterhin kann es vorgesehen sein, dass eine jeweilige Reflektorfläche gegenüber der Stange, an welcher die Reflektorfläche befestigt ist, justierbar ist, insbesondere in wenigstens zwei Freiheitsgraden. So können die Reflektorflächen jeweils unterschiedlich zur Stange ausgerichtet werden und so beispielsweise mit allen Reflektorflächen eine Bündelung des Sonnenlichtes auf ein kleinere Fläche erzielt werden als die Gesamtfläche aller Reflektorflächen.

Innerhalb einer erfindungsgemäßen Vorrichtung können die Reflektorflächen und/oder Reflektoreinheiten in einer m x n - Matrix angeordnet sein, wobei m und n grundsätzlich jede beliebige ganze Zahl annehmen können, insbesondere M auch gleich n sein kann. Eine bevorzugte Variante kann hier vorsehen, dass m und n jeweils eine ungerade Zahl ist, insbesondere wiederum m = n ist. Hierbei kann weiterhin vorgesehen sein, dass zwei jeweils mittig in einer Matrixkante angeordnete Reflektoreinheiten jeweils eine Antriebseinheit umfassen.

Durch entsprechende Ansteuerung der Antriebseinheiten in Abhängigkeit des Sonnenstandes kann die Erfindung als heliostatische Vorrichtung betrieben werden.

Eine Weiterbildung kann hier auch vorsehen, eine Vielzahl erfindungsgemäßer Vorrichtungen nebeneinander, insbesondere in zwei, bevorzugt senkrechten Richtungen nebeneinander anzuordnen und so ein Feld von einer Vielzahl von Vorrichtungen zu schaffen. Hierdurch kann ein großer Heliostat durch eine Vielzahl kleiner Heliostaten realisiert werden. Die Antriebe der Vielzahl von Vorrichtungen können dabei z.B. gekoppelt sein, insbesondere also die Antriebe einer Antriebsrichtung alle gleich angesteuert sein.

Eine Ausführungsform, die nicht Teil der vorliegenden Erfindung ist, wird anhand der folgenden Figuren näher erläutert.

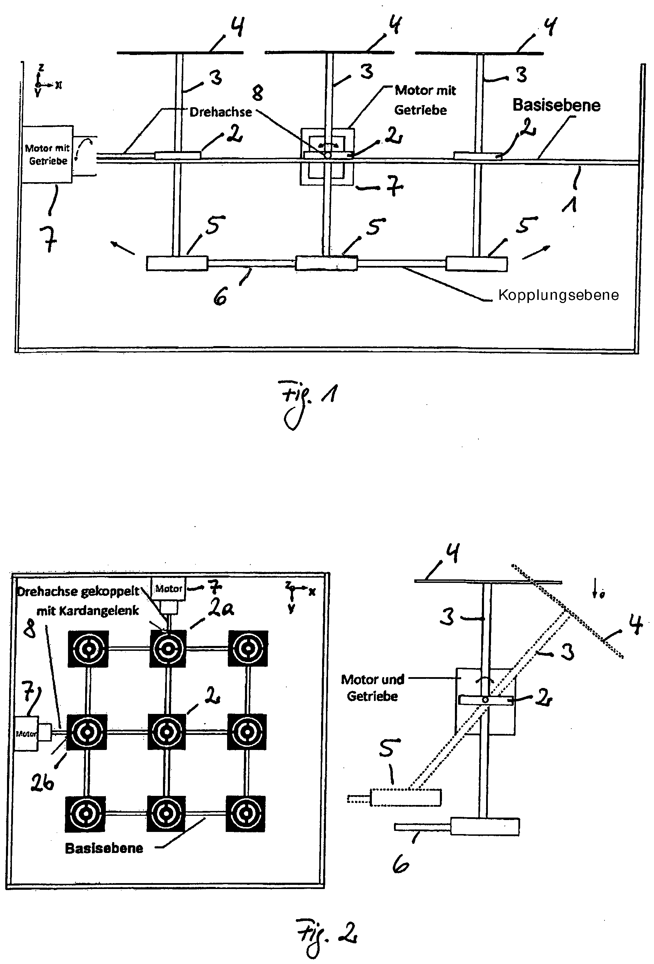

Die Figur 1 zeigt eine Seitenansicht einer Vorrichtung, die nicht Teil der vorliegenden Erfindung ist, mit hier beispielhaft neun Reflektoreinheiten in einer 3 x 3 Matrixanordnung, wie es Figur 2 in Aufsicht zeigt. Grundsätzlich kann die Anzahl beliebig sein, ist also für die weitere Beschreibung nicht beschränkend.

Die Vorrichtung umfasst hier ein im Raum, d.h. im terrestrischen Bezugssystem ortsfestes Basiselement 1, das als ebene, insbesondere horizontale Platte, z.B. aus Metall (insbesondere Aluminium) ausgebildet sein kann. An diesem Basiselement 1 sind mehrere, hier neun Kardangelenke 2 befestigt, so dass deren Gelenkmittelpunkte alle in derselben Ebene liegen.

In jedem Gelenkmittelpunkt eines solchen Kardangelenkes 2 ist eine Stange 3 beweglich gelagert in einem Bereich zwischen oberem Ende und unterem Ende der Stange 3. Das obere Ende trägt eine Reflektorfläche 4 und ist frei beweglich. Die Normale der Reflektorfläche 4 ist zumindest im Wesentlichen hier parallel zur Stangenerstreckung.

Das untere Ende jeder Stange 3 ist über ein sphärisches Gelenk 5, bevorzugt wiederum ein Kardangelenk mit immer demselben Koppelelement 6 verbunden.

Die Reflektoreinheiten, die durch Reflektorfläche 4, Stange 3, Kardangelenk 2 und sphärisches Gelenk 5 gebildet werden, sind somit alle untereinander über das untere jeweilige Stangenende und das Koppelelement 6 verbunden und bewegen sich gleichzeitig bei Bewegung des Koppelelementes 6.

Die Figur 2 zeigt links eine Aufsicht auf das Basiselement 1 einer Vorrichtung, die nicht Teil der vorliegenden Erfindung ist. Erkennbar sind in der Ebene des Basiselementes 1 die neun Kardangelenke 2, welche die Stange 3 mit dem Basiselement 1 beweglich verbinden.

In der Matrixanordnung sind zwei mittig in einer jeweiligen Matrixkante liegende Kardangelenke 2a, 2b vorgesehen, um das Koppelelement 6 in zwei senkrechten Richtungen zu bewegen.

Hierfür sind die äußeren Drehachsen der Kardangelenke 2a, 2b angetrieben mit je einem Motor 7, also die Drehachsen, die den äußeren Rahmen des Kardangelenkes mit dem mittleren Rahmen verbinden, wobei die beiden Kardangelenke 2a und 2b senkrecht zueinander hinsichtlich ihrer Achsenorientierung am Basiselement 1 befestigt sind.

Durch Drehung der Drehachse 8 bzw. des mittleren Rahmens oder Ringes des jeweiligen Kardangelenkes 2a, 2b wird diese Bewegung über die Stange 3 und das untere sphärische Gelenk 5 auf das Koppelelement 6 und über dieses auf alle anderen Stangen 3 übertragen.

Die Orientierung der übrigen Kardangelenke ist im Wesentlichen unerheblich, insbesondere können aber in einer Vorrichtung alle gleich orientiert sein, bis auf eines, das Teil eines von beiden Antrieben ist, so dass sich hierdurch zwei senkrecht orientierte angetriebene Kardangelenke ergeben.

## Patentansprüche

1. Vorrichtung zur Reflektion von einfallendem Lichtumfassend mehrere nebeneinander angeordnete Reflektoreinheiten mit jeweils mindestens einer Reflektorfläche (4), wobei die Reflektorflächen (4) aller Reflektoreinheiten verschwenkbar sind, wobei jede Reflektoreinheit (2, 3, 4, 5)
eine Stange (3) und eine am oberen freien Ende der Stange (3) befestigte Reflektorfläche (4) umfasst, ein unteres sphärisches Gelenk (5) am unteren Ende der Stange (3) umfasst, mit dem die Stange (3) mit einem für alle Reflektoreinheiten (2, 3, 4, 5) gemeinsamen beweglichen Koppelelement (6) gelenkig verbunden ist, ein sphärisches Kardangelenk (2) in einem Zwischenbereich zwischen oberem Ende und unterem Ende der Stange (2) umfasst, welches die Stange (3) mit einem für alle Reflektoreinheiten (2, 3, 4, 5) gemeinsamen ortsfesten Basiselement (1) gelenkig verbindet und welches jede Reflekoreinheit (2, 3, 4, 5) beweglich um ihren eigenen ortfesten Gelenkmittelpunkt lagert, wobei durch Bewegung des unter dem Basiselement (1) angeordneten Koppelelementes (6) die Reflektorflächen (4) aller Reflektoreinheiten (2, 3, 4, 5) gleichzeitig in gleicher Richtung und gleicher Weite bewegbar sind, wobei die Vorrichtung eine erste und eine zweite Antriebseinheit umfasst, **dadurch gekennzeichnet, dass** jede Antriebseinheit ein mit dem Basiselement (1) verbundenes Kardangelenk (2a, 2b) umfasst, das über eine um den Gelenkmittelpunkt des Kardangelenkes (2a, 2b) bewegliche Verbindungsstange (3) mit einem am Koppelelement (6) befestigten sphärischen Gelenk (5) verbunden ist, wobei die am Basiselement (1) befestigten Kardangelenke (2a, 2b) von erstem und zweiten Antriebseinheit in zueinander senkrechten Drehachsen (8) motorisch angetrieben sind, wobei das angetriebene Kardangelenk (2a, 2b), die Verbindungsstange (3) und das die Verbindungsstange (3) mit dem Koppelelement (6) verbindende sphärische Gelenk (5) einer jeweiligen Antriebseinheit Teile einer Reflektoreinheit (2, 3, 4, 5) sind.

2. Vorrichtung nach Anspruch 1, **dadurch gekennzeichnet, dass** die beiden am Basiselement (1) befestigen Kardangelenke (2a, 2b) der Antriebseinheiten hinsichtlich ihrer beiden unabhängigen Drehachsen (8) senkrecht zueinander orientiert sind, und jedes der beiden Kardangelenke (2a,2b) um diejenige Drehachse (8) angetrieben ist, welches einen äußeren am Basiselement (1) befestigten Rahmen des Kardangelenkes (2a, 2b) mit einem mittleren Rahmen verbindet.

3. Vorrichtung nach einem der vorherigen Ansprüche, **dadurch gekennzeichnet, dass** die Gelenkmittelpunkte derjenigen sphärischen Gelenke (2), insbesondere derjenigen Kardangelenke (2), welche eine Stange (3) und/oder Verbindungsstange mit dem gemeinsamen Basiselement (1) verbinden oberhalb der Schwerpunkte der Reflektoreinheiten (2, 3, 4, 5) und/oder Antriebseinheiten angeordnet sind.

4. Vorrichtung nach einem der vorherigen Ansprüche, **dadurch gekennzeichnet, dass** wenigstens eine Reflektoreinheit (2, 3, 4, 5) einen Neigungssensor umfasst.

5. Vorrichtung nach einem der vorherigen Ansprüche, **dadurch gekennzeichnet, dass** eine Reflektorfläche (4) gegenüber der Stange (3), an welcher die Reflektorfläche (4) befestigt ist, justierbar ist, insbesondere in wenigstens zwei Freiheitsgraden.

6. Vorrichtung nach einem der vorherigen Ansprüche, **dadurch gekennzeichnet, dass** die Reflektorflächen (4) und/oder Reflektoreinheiten (2, 3, 4, 5) in einer m x n - Matrix angeordnet sind, wobei m und n jeweils eine ungerade Zahl ist, insbesondere m = n ist und zwei jeweils mittig in einer Matrixkante angeordnete Reflektoreinheiten (2, 3, 4, 5) jeweils eine Antriebseinheit umfassen, insbesondere ein in einer Drehachse angetriebenes Kardangelenk umfassen..

7. Vorrichtung nach einem der vorherigen Ansprüche, **dadurch gekennzeichnet, dass** die Antriebseinheiten angesteuert sind zur Ausbildung einer heliostatischen Vorrichtung.

## Claims

1. Apparatus for reflecting incident light, comprising a plurality of reflector units, arranged one next to the other, each having at least one reflector surface (4), wherein the reflector surfaces (4) of all reflector units are pivotable, wherein each reflector unit (2, 3, 4, 5) comprises a pole (3) and a reflector surface (4) attached to the upper free end of the pole (3),
comprises at the lower end of the pole (3) a lower spherical joint (5) to which the pole (3) is connected in an articulated fashion by way of a movable coupling element (6) that is common to all reflector units (2, 3, 4, 5),
comprises in an intermediate region between the upper end and the lower end of the pole (2) a spherical universal joint (2) which connects the pole (3) in an articulated fashion to a positionally fixed base element (1) common to all reflector units (2, 3, 4, 5) and which supports each reflector unit (2, 3, 4, 5) movably about its own positionally fixed joint centre point, wherein,
by moving the coupling element (6) that is arranged under the base element (1), the reflector surfaces (4) of all reflector units (2, 3, 4, 5) are movable simultaneously in the same direction and to the same extent,
wherein the apparatus comprises a first and a second drive unit, **characterized in that** each drive unit comprises a universal joint (2a, 2b), which is connected to the base element (1) and is connected to a spherical joint (5), which is attached to the coupling element (6), via a connecting pole (3) which is movable about the joint centre point of the universal joint (2a, 2b), wherein the universal joints (2a, 2b) that are attached to the base element (1) are motor-driven by the first and second drive units in mutually perpendicular shafts (8), wherein the driven universal joint (2a, 2b), the connecting pole (3) and the spherical joint (5), connecting the connecting pole (3) to the coupling element (6), of a respective drive unit are parts of a reflector unit (2, 3, 4, 5).

2. Apparatus according to Claim 1, **characterized in that** the two universal joints (2a, 2b), attached to the base element (1), of the drive units in terms of their two independent shafts (8) are oriented perpendicularly with respect to one another and each of the two universal joints (2a, 2b) is driven about the shaft (8) which connects an external frame, attached to the base element (1), of the universal joint (2a, 2b) to a central frame.

3. Apparatus according to one of the preceding claims, **characterized in that** the joint centre points of the spherical joints (2), in particular of the universal joints (2), that connect a pole (3) and/or connecting pole to the common base element (1) are arranged above the centroids of the reflector units (2, 3, 4, 5) and/or drive units.

4. Apparatus according to one of the preceding claims, **characterized in that** at least one reflector unit (2, 3, 4, 5) comprises an inclination sensor.

5. Apparatus according to one of the preceding claims, **characterized in that** a reflector surface (4) is adjustable with respect to the pole (3) to which the reflector surface (4) is attached, in particular is adjustable in at least two degrees of freedom.

6. Apparatus according to one of the preceding claims, **characterized in that** the reflector surfaces (4) and/or reflector units (2, 3, 4, 5) are arranged in an m x n matrix, with both m and n being an odd number, in particular m = n, and two reflector units (2, 3, 4, 5) arranged respectively centrally in a matrix edge comprise a drive unit each, in particular a universal joint that is driven in a shaft.

7. Apparatus according to one of the preceding claims, **characterized in that** the drive units are actuated to form a heliostatic apparatus.

## Revendications

1. Dispositif permettant de réfléchir une lumière incidente comprenant plusieurs unités de réflecteur disposées l'une à côté de l'autre avec chacune au moins une face de réflecteur (4), dans lequel les faces de réflecteur (4) de toutes les unités de réflecteur sont pivotantes, dans lequel chaque unité de réflecteur (2, 3, 4, 5)
comprend une tige (3) et une face de réflecteur (4) fixée à l'extrémité supérieure libre de la tige (3),
comprend une articulation inférieure sphérique (5) à l'extrémité inférieure de la tige (3), avec laquelle la tige (3) est reliée de façon articulée à un élément de couplage mobile (6) commun pour toutes les unités de réflecteur (2, 3, 4, 5),
comprend une articulation sphérique à cardan (2) dans une région intermédiaire entre l'extrémité supérieure et l'extrémité inférieure de la tige (3), qui relie de façon articulée la tige (3) à un élément de base stationnaire (1) commun pour toutes les unités de réflecteur (2, 3, 4, 5) et qui supporte chaque unité de réflecteur (2, 3, 4, 5) de façon mobile autour de son propre centre d'articulation stationnaire,
les faces de réflecteur (4) de toutes les unités de réflecteur (2, 3, 4, 5) sont déplaçables simultanément dans la même direction et de la même distance par le mouvement de l'élément de couplage (6) disposé sous l'élément de base (1), dans lequel le dispositif comprend une première et une seconde unités d'entraînement, **caractérisé en ce que** chaque unité d'entraînement comprend une articulation à cardan (2a, 2b) reliée à l'élément de base (1), qui est reliée par une tige de liaison (3) mobile autour du centre d'articulation de l'articulation à cardan (2a, 2b) à une articulation sphérique (5) fixée à l'élément de couplage (6), dans lequel les articulations à cardan (2a, 2b) fixées à l'élément de base (1) sont entraînées de façon motorisée par la première et la seconde unités d'entraînement suivant des axes de rotation (8) perpendiculaires l'un à l'autre, dans lequel l'articulation à cardan entraînée (2a, 2b), la tige de liaison (3) et l'articulation sphérique (5) reliant la tige de liaison (3) à l'élément de couplage (6) d'une unité d'entraînement respective font partie d'une unité de réflecteur (2, 3, 4, 5).

2. Dispositif selon la revendication 1, **caractérisé en ce que** les deux articulations à cardan (2a, 2b) des unités d'entraînement fixées à l'élément de base (1) ont leurs deux axes de rotation indépendants (8) orientés perpendiculairement l'un à l'autre, et chacune des deux articulations à cardan (2a, 2b) est entraînée autour de l'axe de rotation (8), qui relie un cadre extérieur de l'articulation à cardan (2a, 2b) fixé à l'élément de base (1) à un cadre intermédiaire.

3. Dispositif selon l'une quelconque des revendications précédentes, **caractérisé en ce que** les centres d'articulation des articulations sphériques (2), en particulier des articulations sphériques (2) qui relient une tige (3) et/ou une tige de liaison à l'élément de base commun (1), sont disposés au-dessus des centres de gravité des unités de réflecteur (2, 3, 4, 5) et/ou des unités d'entraînement.

4. Dispositif selon l'une quelconque des revendications précédentes, **caractérisé en ce qu'**au moins une unité de réflecteur (2, 3, 4, 5) comprend un détecteur d'inclinaison.

5. Dispositif selon l'une quelconque des revendications précédentes, **caractérisé en ce qu'**une face de réflecteur (4) peut être ajustée par rapport à une tige (3), à laquelle la face de réflecteur (4) est fixée, en particulier dans deux degrés de liberté.

6. Dispositif selon l'une quelconque des revendications précédentes, **caractérisé en ce que** les faces de réflecteur (4) et/ou les unités de réflecteur (2, 3, 4, 5) sont disposées selon une matrice m x n, dans lequel m et n sont chacun un nombre impair, en particulier m = n, et deux unités de réflecteur (2, 3, 4, 5) disposées respectivement au milieu d'un côté de matrice comprennent chacune une unité d'entraînement, en particulier une articulation à cardan entraînée suivant un axe de rotation.

7. Dispositif selon l'une quelconque des revendications précédentes, **caractérisé en ce que** les unités d'entraînement sont commandées de façon à former un dispositif héliostatique.
